# EUROPEAN PATENT SPECIFICATION

(11) **EP 2 786 290 B1**
(45) Date of publication and mention of the grant of the patent: **18.04.2018**
(21) Application number: 12853836.0
(22) Date of filing: 29.11.2012
(51) Int. Cl.: G06T 7/50, G06T 7/13, G06T 7/62, G06T 7/181, G06T 17/05

(54) **SYSTEM FOR AUTOMATIC STRUCTURE FOOTPRINT DETECTION FROM OBLIQUE IMAGERY**
SYSTEM ZUR AUTOMATISCHEN ERKENNUNG DES GRUNDRISSES EINER STRUKTUR AUS SCHRÄGEN BILDERN
SYSTÈME POUR LA DÉTECTION AUTOMATIQUE D'EMPREINTES DE STRUCTURE À PARTIR D'IMAGERIE OBLIQUE

(30) Priority: 29.11.2011 US 201161564699 P
(43) Date of publication of application: 08.10.2014
(73) Proprietor: Pictometry International Corp., Rochester, New York 14623-4260 (US)
(72) Inventor: SCHULTZ, Stephen, L., West Henrietta, NY 14586 (US); YANDONG, Wang, Webster, NY 14580 (US)
(74) Representative: Alton, Andrew
(86) International application number: PCT/US2012/067053
(87) International publication number: WO 2013/082280

(56) References cited:
- US-A1- 2010 296 693
- US-A1- 2010 315 412
- US-A1- 2011 033 110
- US-A1- 2011 075 882
- US-A1- 2011 187 713
- Adam P Nyaruhuma ET AL: "LINE MATCHING IN OBLIQUE AIRBORNE IMAGES TO SUPPORT AUTOMATIC VERIFICATION OF BUILDING OUTLINES", Proc. ASPRS 2010, 26 April 2010 (2010-04-26), pages 1-10, XP055185764, Retrieved from the Internet: URL:http://www.researchgate.net/profile/Ma rkus_Gerke/publication/260248590_Line_matc hing_in_oblique_airborne_images_to_support _automatic_verification_of_building_outlin es/links/542a60460cf277d58e871a15.pdf [retrieved on 2015-04-24]
- JEONGHO LEE: "Extraction and Regularization of Various Building Boundaries with Complex Shapes Utilizing Distribution Characteristics of Airborne LIDAR Points", ETRI JOURNAL, vol. 33, no. 4, 8 August 2011 (2011-08-08) , pages 547-557, XP055185765, ISSN: 1225-6463, DOI: 10.4218/etrij.11.1610.0022
- J Xiao ET AL: "AUTOMATIC DETECTION OF BUILDINGS WITH RECTANGULAR FLAT ROOFS FROM MULTI-VIEW OBLIQUE IMAGERY", IAPRS, Vol. XXXVIII, Part 3A, 1 September 2010 (2010-09-01), pages 251-256, XP055184944, Retrieved from the Internet: URL:http://www.isprs.org/proceedings/XXXVI II/part3/a/pdf/251_XXXVIII-part3A.pdf [retrieved on 2015-04-22]
- NORONHA S ET AL: "DETECTION AND DESCRIPTION OF BUILDINGS FROM MULTIPLE AERIAL IMAGES", PROCEEDINGS OF THE 1997 IEEE COMPUTER SOCIETY CONFERENCE ON COMPUTER VISION AND PATTERN RECOGNITION. SAN JUAN, PUERTO RICO, JUNE 17 - 19, 1997; [PROCEEDINGS OF THE IEEE COMPUTER SOCIETY CONFERENCE ON COMPUTER VISION AND PATTERN RECOGNITION], LOS ALAM, vol. CONF. 16, 17 June 1997 (1997-06-17), pages 588-594, XP000776554, ISBN: 978-0-7803-4236-1
- HAALA N ET AL: "An update on automatic 3D building reconstruction", ISPRS JOURNAL OF PHOTOGRAMMETRY AND REMOTE SENSING, AMSTERDAM [U.A.] : ELSEVIER, AMSTERDAM, NL, vol. 65, no. 6, 1 November 2010 (2010-11-01), pages 570-580, XP027487903, ISSN: 0924-2716, DOI: 10.1016/J.ISPRSJPRS.2010.09.006 [retrieved on 2010-10-20]

## Description

In remote sensing/aerial imaging industry, imagery may be used to capture views of a geographic area in order to measure objects and/or structures within the images. These are generally referred to as "geo-referenced images" and come in two basic categories:

Vertical Imagery - images captured with a camera pointed vertically downward thus generally capturing the tops of structures; and,

Oblique Imagery - images captured with a camera aimed at an angle capturing the sides, as well as, tops of structures.

Most vertical imagery may be processed in order to fit a mathematically rectangular projection or map. This process is known as ortho-rectification and attempts to create an appearance as if the sensor were directly above each pixel in the image. The resulting image is known as an ortho-photo. Since the images are mathematically projected, they may be combined into a seamless mosaic resulting in a composite image known as an ortho-mosaic. The term 'ortho image' is used to denote a geo-referenced image that is either an ortho-photo image or an ortho-mosaic image.

Because they are captured looking straight down, an ortho-photo or othro-mosaic contains a view of world which many are not accustomed. As a result, there may be difficulty in distinguishing between two different properties as the only portions of the structures visible in the ortho-mosaic are roof tops. An oblique image, in contrast, is captured at an angle showing sides of objects and structures.

Aerial imagery may be used in identification of dimensions of buildings or structures. Assessors generally rely on dimensions of a building to assess a value to that building. In many cases, dimensions of the building may be determined by measuring a building's footprint provided by the base of that building.

Traditional ortho-rectified imagery, however, does not reveal the base of the building, but instead reveals the edge of the roof. For example, ortho-rectified imagery may only show edges or eaves of a roof and not the base of a building. For commercial buildings with no overhangs, this may not create an issue as the edge of the roof may be the same footprint of the building.

In contrast, residential homes and other similar buildings may have eaves extending from the roof line beyond walls of a building. As such, when extracting building "footprints" from ortho-rectified imagery, a "hat-print" is created, not a footprint. That is, the resulting outline may be representative of an edge of eaves projected down to the ground adding additional square footage to the dimensions. Relatively standard eaves may even add one to two feet to the dimensions of a house in all directions. Thus, a 25' by 30' house may increase in measurement to 28' by 33', thereby increasing measured square footage from 750 to 924 square feet. This creates a 23% error in the measured size of that house.

To be able to see under the edges of the roof, imagery may need to be captured at an angle. For example, imagery may be captured using oblique aerial imagery. These oblique aerial images, however, may only see two sides, or at most three sides of a building. In order to generate a footprint of a building using oblique aerial imagery, each side of the building may need to be found and then fitted together to form the entire footprint.

"Line Matching in Oblique Airborne Images to Support Automatic Verification of Building Outlines", Adam P Nyaruhma, et al., Proc. APSPRS 2010, pages 1-10, XP055185764, describes a method for extraction of wall data of buildings from oblique images for comparison to map data to verify whether the buildings remain as mapped, or have been demolished. The approach uses 2D cadastral building data with outlines as a basis. Then, two-dimensional lines are extracted from oblique aerial images. The lines for images taken from different perspectives of the same wall are compared to determine matches. The matched lines are projected to a plane containing the building wall in order to reconstruct three-dimensional object lines of the wall. Finally, the lines are compared with the 2D cadastral data to determine if the building walls still exist.

A first aspect of the invention provides a computer implemented method according to claim 1. A second aspect of the invention provides a non-transitory computer readable medium storing a set of instructions for running on a computer system to carry out the method of the first aspect of the invention.

A third aspect of the invention provides a computer system for determining a footprint of a structure, comprising: at least one processor; and the non-transitory computer readable medium of the second aspect of the invention.

### Brief Description of the Several Views of the Drawings

To assist those of ordinary skill in the relevant art in making and using the subject matter hereof, reference is made to the appended drawings, which are not intended to be drawn to scale, and in which like reference numerals are intended to refer to similar elements for consistency. For purposes of clarity, not every component may be labeled in every drawing.
Fig. 1 is a schematic diagram of the hardware forming an exemplary embodiment of a computer system constructed in accordance with the present disclosure.
Fig. 2 is a pictorial representation of footprints of structures in accordance with the present disclosure.
Figs. 3A and 3B are flowcharts of exemplary methods for determining a footprint of a structure in accordance with the present disclosure.
Fig. 4 is a pictorial representation of an exemplary oblique image of a structure.
Fig. 5 is a pictorial representation of a geo-referenced image showing an exemplary process for detecting location of a structure.
Fig. 6A is a pictorial representation of a geo-referenced image showing multiple vertices located with the geo-referenced image for defining edges of a structure.
Fig. 6B is a pictorial representation of an exemplary process for defining edges of a structure utilizing the vertices depicted in Fig. 6A.
Fig. 7 is a pictorial representation of a geo-referenced image showing an exemplary process for defining roof sections of structures to provide bound box areas.
Figs. 8-11 are simplified pictorial representations showing an exemplary process for determining line segments of a structure in accordance with the present invention.
Fig. 12 is a pictorial representation of a structure having multiple line segments in a cardinal direction.
Fig. 13 is a pictorial representation of a footprint of a structure.

### Detailed Description

Before explaining at least one embodiment of the disclosure in detail, it is to be understood that the disclosure is not limited in its application to the details of construction, experiments, exemplary data, and/or the arrangement of the components set forth in the following description or illustrated in the drawings.

The disclosure is capable of other embodiments or of being practiced or carried out in various ways. Also, it is to be understood that the phraseology and terminology employed herein is for purpose of description and should not be regarded as limiting.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" is employed to describe elements and components of the embodiments herein. This is done merely for convenience and to give a general sense of the inventive concept. This description should be read to include one or more and the singular also includes the plural unless it is obvious that it is meant otherwise.

Further, use of the term "plurality" is meant to convey "more than one" unless expressly stated to the contrary.

Finally, as used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

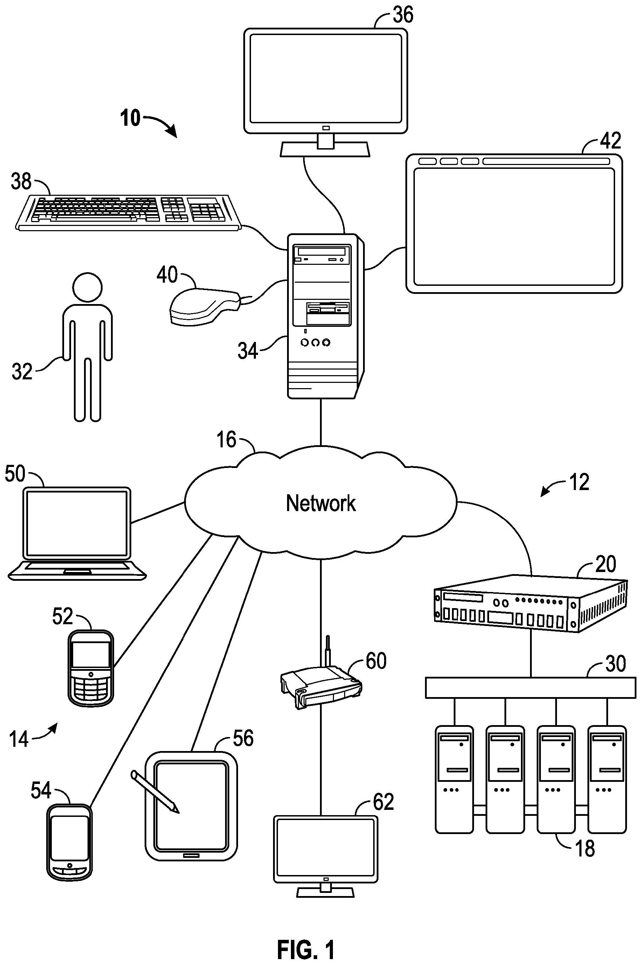

Referring now to the drawings, and in particular to FIG. 1, shown therein and designated by a reference numeral 10 is an exemplary system constructed in accordance with the present disclosure. System 10 may be a system or systems that are able to embody and/or execute the logic of the processes described herein. Logic embodied in the form of software instructions, or firmware may be executed on any appropriate hardware which may be a dedicated system or systems, or a personal computer system, or distributed processing computer system. In particular, logic may be implemented in a stand-alone environment operating on a single computer system, or logic may be implemented in a networked environment such as a distributed system using multiple computers and/or processors.

In some embodiments, system 10 may be distributed, and include a host system 12, communicating with one or more user devices 14 via a network 16. Network 16 may be the Internet and/or other network. Host system 12 may include one or more servers 18 configured to communicate with network 16 via one or more gateways 20. If network 16 is the Internet, a primary user interface of system 10 may be delivered through a series of web pages. It should be noted that the primary user interface of system 10 may be replaced by another type of interface, such as a Windows-based application (e.g., deploying system 10 in a stand-alone environment such as a kiosk).

Network 16 may be almost any type of network. For example, network 16 may be an Internet and/or Internet 2 network. In one embodiment, network 16 exists in an Internet environment (e.g.,) TCP/IP-based network. It is conceivable that in the near future, embodiments of the present disclosure may use more advanced networking topologies.

Servers 18 may be networked with a LAN 30. Gateway 20 may be an entity responsible for providing access between the LAN 30 and network 16. In some embodiments, gateway 20 may also be used as a security means to protect LAN 30 from attack from external networks such as network 16.

In some embodiments, LAN 30 may be based on a TCP/IP network (e.g., the Internet), or may be based on another underlying network transport technology. For example, LAN 30 may include an Ethernet network with TCP/IP because of the availability and acceptance of underlying technologies, but other embodiments may use other types of networks such as Fibre Channel, SCSI, Gigabit Ethernet, and/or the like

Host system 12 may include one or more servers 18. Configuration of the server hardware may be dependent on requirements and needs of the particular embodiment of system 10. For example, host system 12 may include multiple servers 18 with load balancing to increase stability and availability. Servers 18 may include database servers and application/web servers. In one embodiment, database servers may be separated from application/web servers for availability and/or to provide database servers with increased hardware and/or storage.

User devices 14 may be any number and/or type of devices. For example, user device 14 may involve a user 32, using a computer 34 with a display 36, keyboard 38, and mouse 40. User devices 14 may have computer readable medium associated with the user device 14. Display 36 may be a single monitor or multiple adjacent monitors. In some embodiments, user device 14 may include a type of software called a "browser" 42 to render code content (e.g. HTML/XHTML) generated when requesting resources from a source (e.g., host system 12). Additionally, in some embodiments, system 10 may be designed to be compatible with major Web Browser vendors (e.g., Microsoft Internet Explorer, Google Chrome, Mozilla Firefox, and Opera). Other embodiments may focus on one particular browser depending upon the common user base using system 10.

User devices 14 may be implemented as a portable device such as a laptop computer 50 (or handheld computer); a cellular telephone 52 with a micro or embedded Web Browser; a Portable Digital Assistant 54 (PDA) capable of wireless network access; a pen-based and/or tablet computer 56. In some embodiments, user device 14 may be a cable box 60 and/or other similar device for viewing through a display 62 and/or television. Current embodiments of system 10 may also be modified to use any of these or future developed devices.

System 10 may be designed to provide flexibility in deployment. Depending upon the requirements of the particular embodiment, instructions may be designed to work in almost any environment such as a desktop application, a web application, and/or even simply as a series of web services designed to communicate with an external application.

Hardware and system software may be designed with two key concerns; flexibility and scalability. Although some specifics for software and hardware components may be mentioned herein, it will be understood that a wide array of different components may be substituted, such as using different database vendors and/or even replacing the databases with XML-based document stores.

When system 10 is used to execute the logic of the processes described herein, such computer(s) and/or execution may be conducted at a same geographic location or multiple different geographic locations. Furthermore, the execution of logic may be conducted continuously or at multiple discrete times. Further, the execution of the logic can be implemented on one or more of the servers 18 of the host system 12, the user devices 14 and combinations thereof.

In general, system 10 may be capable of displaying and navigating geo-referenced imagery, such as aerial oblique imagery or aerial orthogonal imagery. The geo-referenced imagery may be represented by a single pixel map, and/or by a series of tiled pixel maps that when aggregated recreate the image pixel map. The geo-referenced imagery can be stored in a non-transitory memory in one or more electronic files that can be rendered into a picture. The electronic files can be any suitable format, such as JPEG, BMP, TIFF or the like.

System 10 will be described by way of example utilizing aerial geo-referenced images as the geo-referenced imagery shown on the display 36 of the computer 34. However, it should be understood that system 10 may use other types of geo-referenced images, such as architectural images.

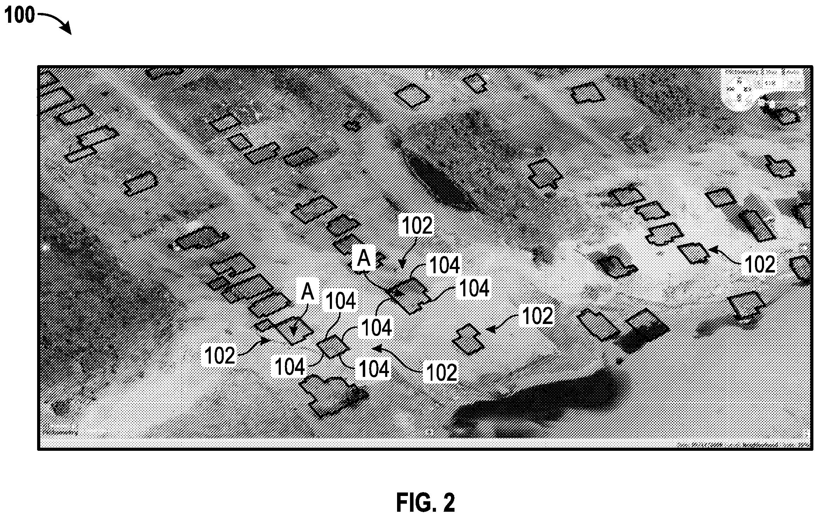

Referring to FIGS. 1-2, screen 100 may be displayed on display 36 of computer 34. Screen 100 illustrates an exemplary footprint extraction using systems and methods as described herein. Each footprint 102 may include a plurality of line segments 104. Line segments 104 may be mapped out in a two-dimensional plane providing for calculation of an area A contained within footprint 102.

By using oblique imagery to extract a height measurement, a volume of a structure having footprint 102 may also be calculated and/or averaged. For example, story heights of a structure with footprint 102 may be used in determining the number of floors of that structure, and thus, additional square footage of an upper living area may also be added into calculations.

Further, if roof lines of a structure have been determined, (e.g., by systems and methods as described in U.S. Patent Application Serial No. 12/909,692 published as US patent applicatyion publication No. US 2012/0101783), then footprint 102 may be extruded upwards until footprint 102 meets roof lines of that structure and a full three-dimensional model of that structure may be generated. The three-dimensional model may then become the basis of a virtual property model containing not only information about roof, living area, and/or side walls, but additional information from multiple data sources may be attached to the data record providing additional uses including, providing bids for remodeling and/or additional capabilities as described in European Application No. 99123877.5 filed on February 12, 1999, and Publication No. EP1010966 filed on February 12, 1999.

Information provided by footprint 102 may be used within industries including, but not limited to, assessment industries, pipeline industries, roofing industries, and the like. For example, footprint 102 may be used within the pipeline industry to determine potential impact of a pipeline leak rupture through classification of high consequence areas.

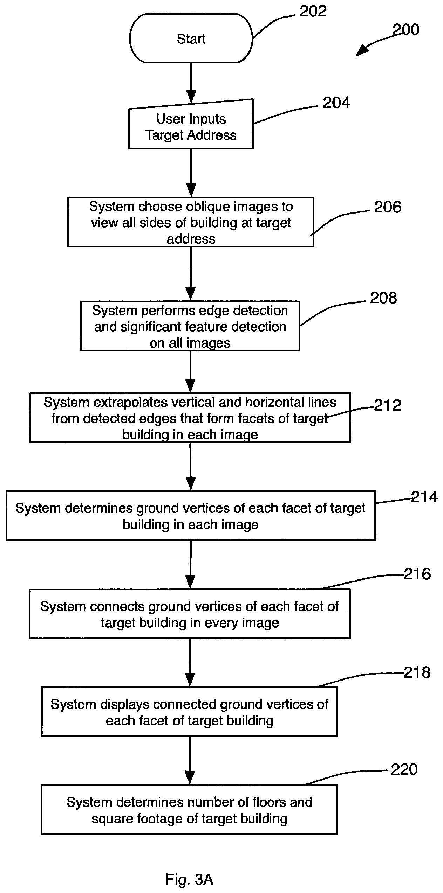

FIG. 3A illustrates a flow chart 200 of an exemplary methods for obtaining the footprint 102. Referring to FIG. 3A, generally, in a step 204, location of structure 106 may be obtained. For example, user 32 may input a target address. In a step 206, system 10 may select geo-referenced images 300 (e.g., oblique geo-referenced images) to view all sides of structure 106 at the location of structure 106 (i.e., target address). In this step, the system 10 may load and/or receive one or more electronic files of the oblique imagery into a non-transitory memory of one or more of the servers 18, for example. In a step 208, the system 10 may perform edge detection and significant features detection on geo-referenced images 300 providing vertical edges 108, horizontal edges 110 and sloped edges 112. In a step 212, system 10 may extrapolate vertical edges 108 and horizontal edges 110 of structure 106 in each image. In a step 214, system 10 may determine ground vertices 114 of each facet of structure 106 in each geo-referenced image 300. In a step 216, the system 10 may connect ground vertices 114 of each facet of the structure 106 in the geo-referenced images 300. In a step 218, system 10 may display connected ground vertices 114 of each facet of structure 106 providing the footprint 102 of the structure 106.

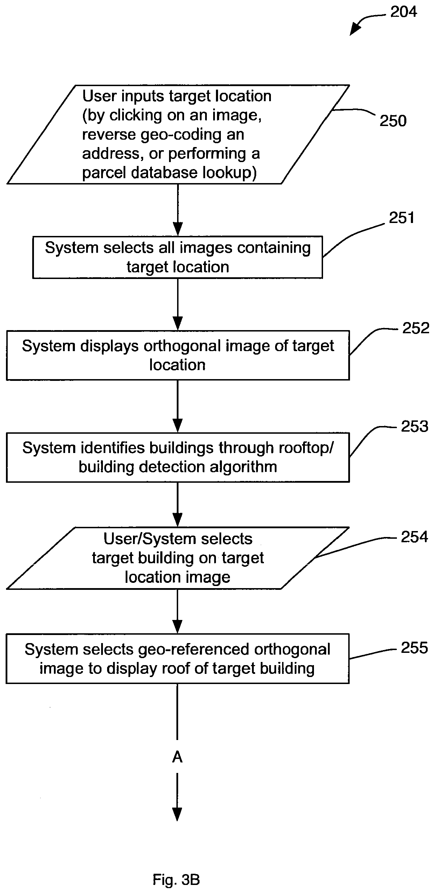

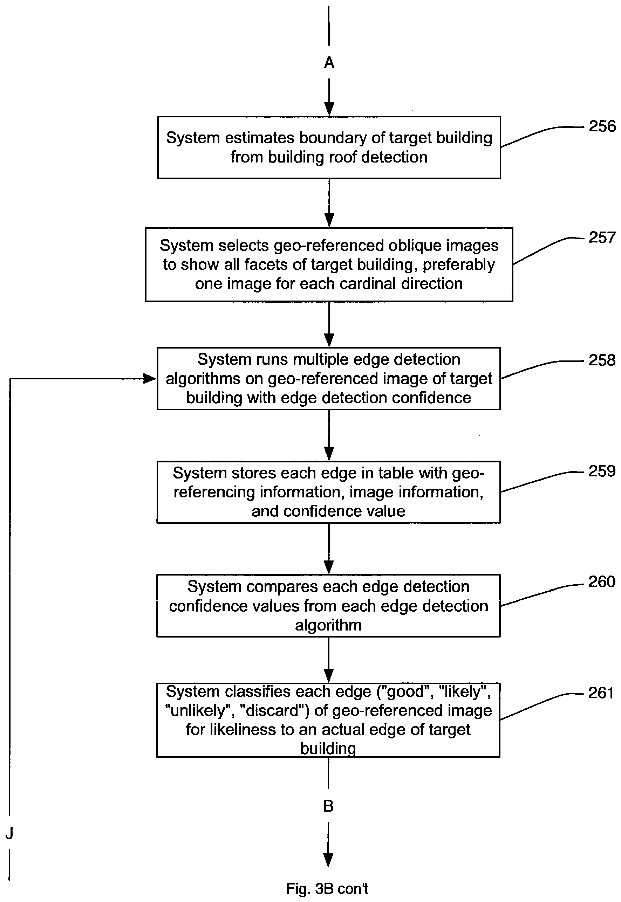

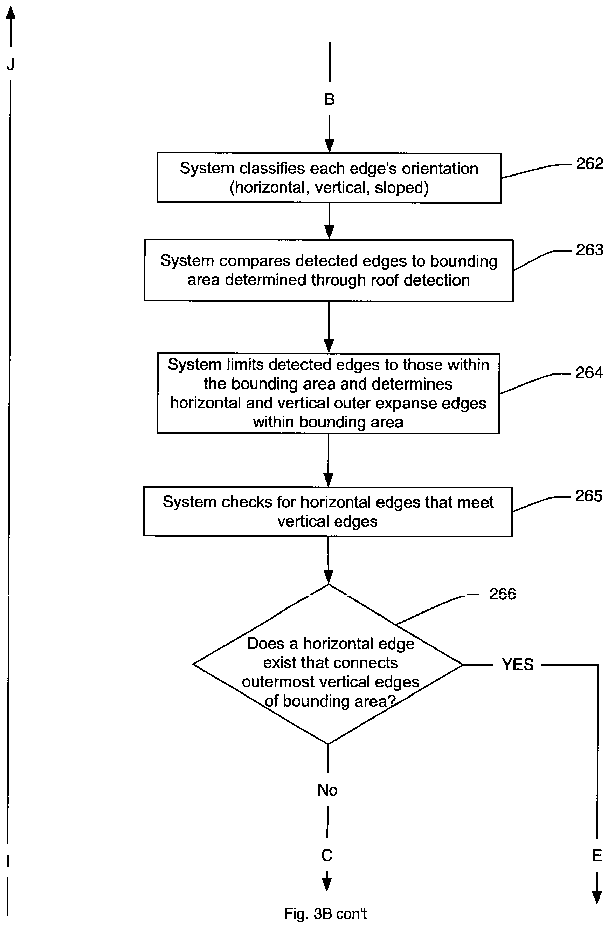

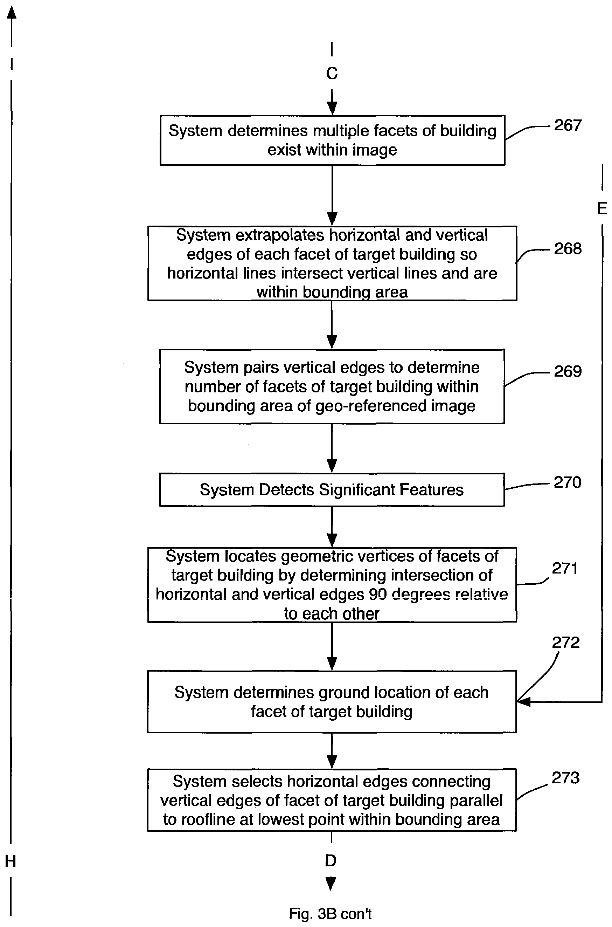

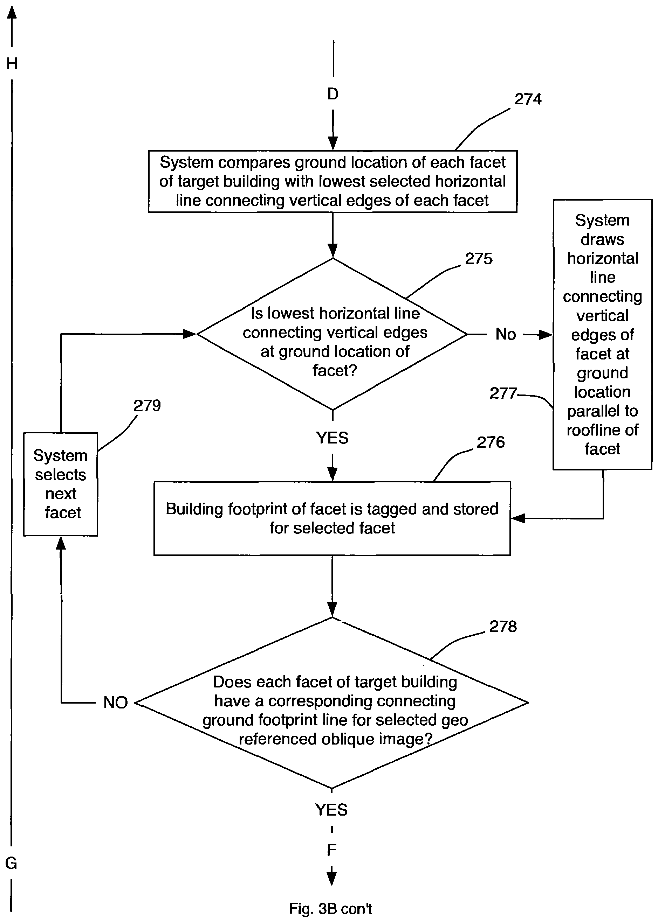

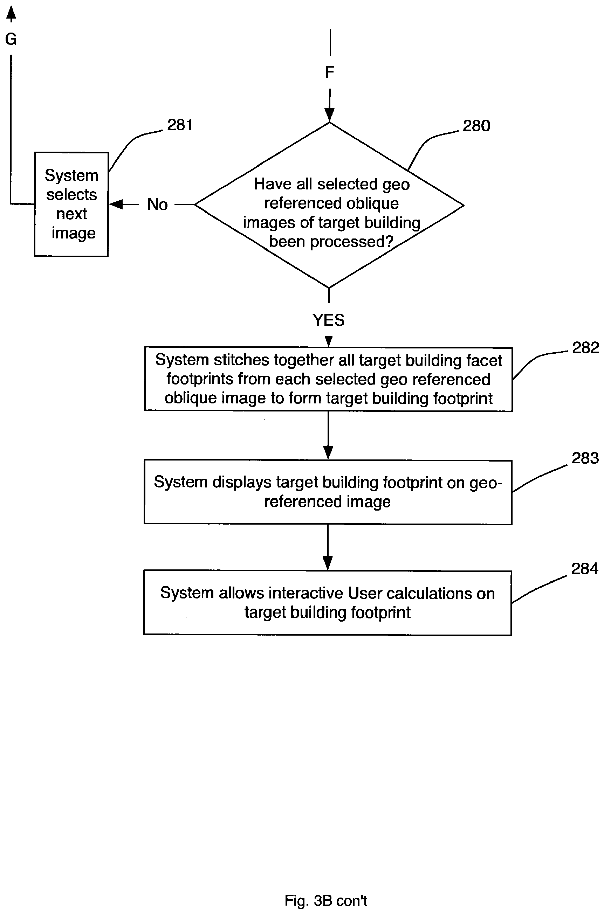

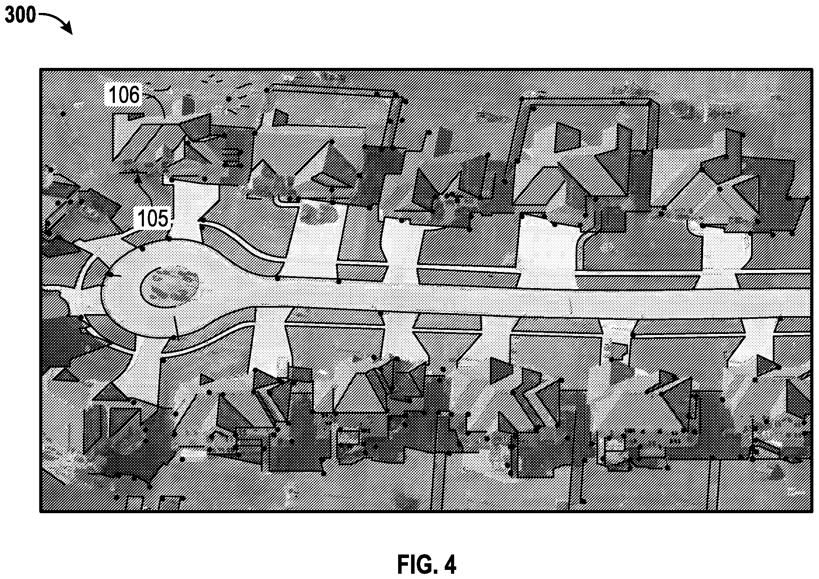

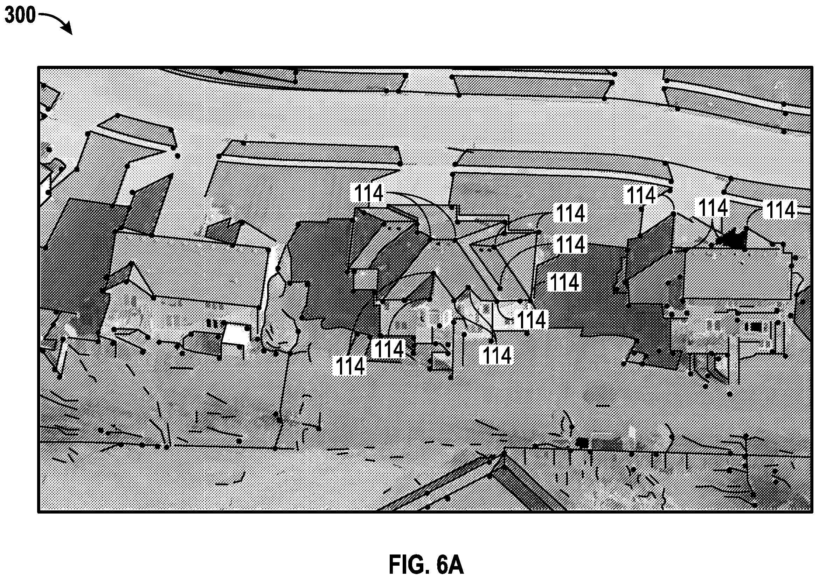

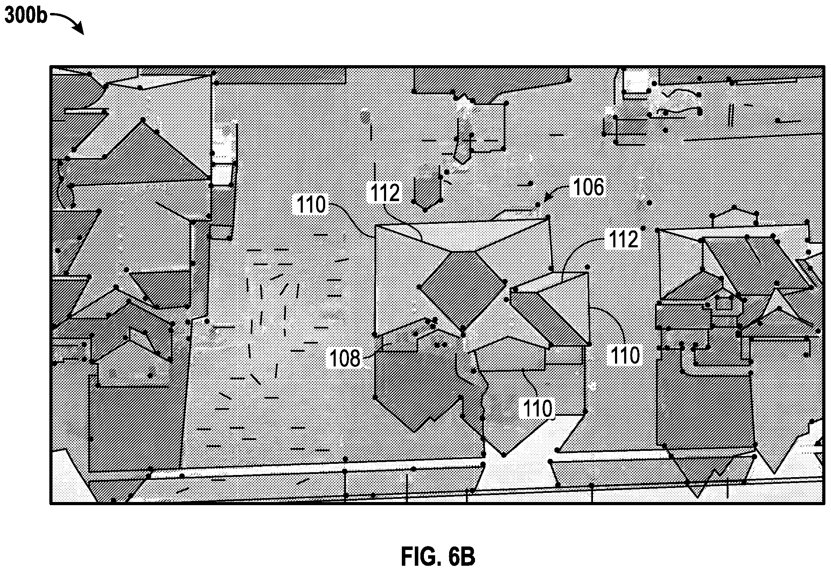

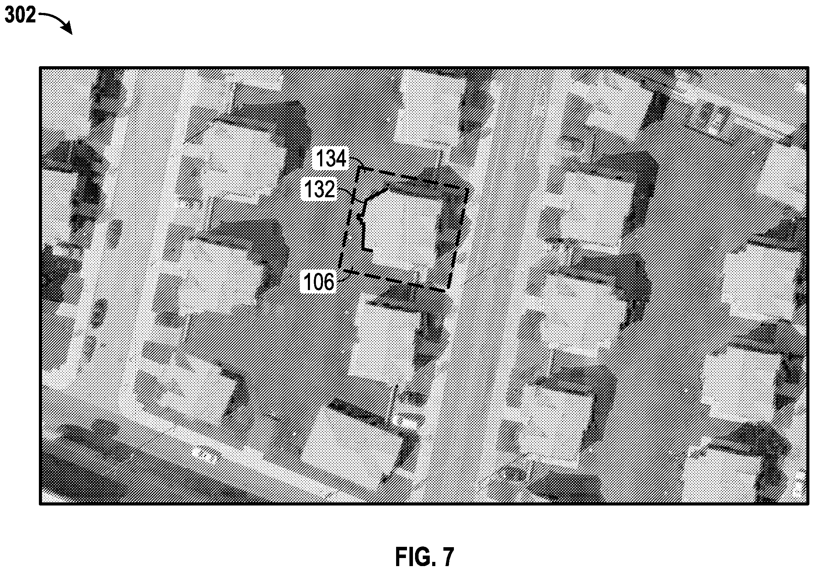

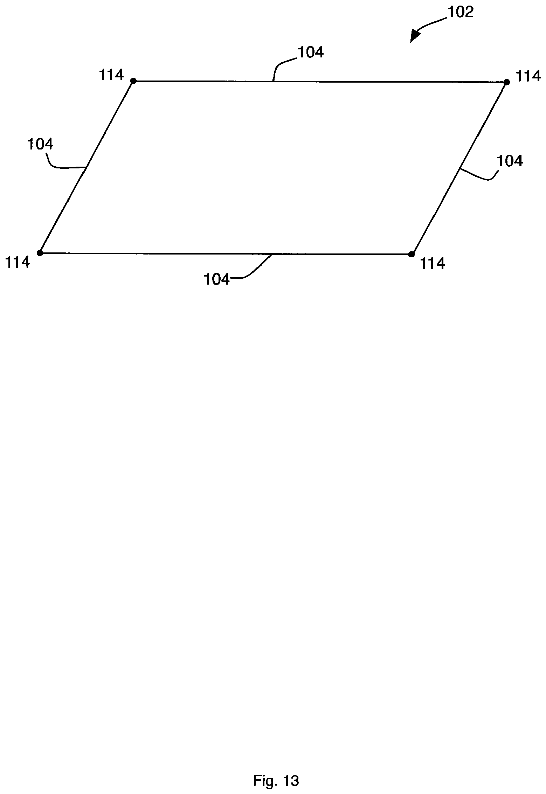

FIG. 3B provides an exemplary detailed method for obtaining a footprint 102 using system and methods illustrated in FIGS. 1 and 4-13. Referring to FIGS. 3B and 4, geo-referenced images 300 of structures 106 may be obtained using oblique aerial imagery. In one embodiment, oblique geo-referenced images 300 may be obtained using oblique aerial imagery as described in U.S. Patent No. 7,787,659, U.S. Patent No. 7,873,238, and U.S. Patent No. 5,247,356.

Alternatively, geo-referenced images 300 may be obtained using oblique terrestrial imagery. For example, in some embodiments, images may be obtained using oblique terrestrial imagery if images are capable of being measured upon (metric) and/or determined to reveal base of structure 106.

In some embodiments, oblique geo-referenced images 300 may be provided using techniques described in U.S. Patent No. 7,424,133. Geo-referenced images 300 may be oblique images having stored geo-referenced parameters. Geo-referenced images 300 and parameters when combined with a tessellated ground plane may provide a determination of pixel location in real world coordinates such as latitude/longitude in geo-referenced image 300 using solely that image. Further measurements may then be made by calculating differences in pixel location between points of measurements. For example, for distance measurements, calculations may be determined using circle routes and/or across a terrain by tracing a route along a tessellated ground plane.

Referring to FIGS. 1, 3B and 4, geo-referenced image 300 may be provided on the display 36 of the system 10. Geo-referenced image 300 includes the structure 106 such that upon rendering, the structure 106 is shown within the geo-referenced image 300. Multiple geo-referenced images 300 showing multiple facets of structure 106 may be provided. For example, geo-referenced images 300 from each cardinal direction may be provided for each structure 106. The electronic file of the oblique geo-referenced image 300 may contain or be analyzed to generate wire frame data of the structure 106.

Location of structure 106 may be provided from a variety of sources. In some embodiments, geo-referenced images 300 of structures 106 or any additional images of structures 106 may be selected by user 32 as indicated by reference number 250 in FIG. 3B. For example, user 32 may self-select one or more targeted locations and/or structures 106 from a reverse geo-coding of an address, from a parcel database having geo-location for structure 106, and/or the like as indicated by reference number 250 in FIG. 3B. Once a target location is selected, system 10 may select all geo-referenced images 300 containing the target location and display geo-referenced image 300 of structure 106 as indicated by reference numbers 251 and 252 in FIG. 3B.

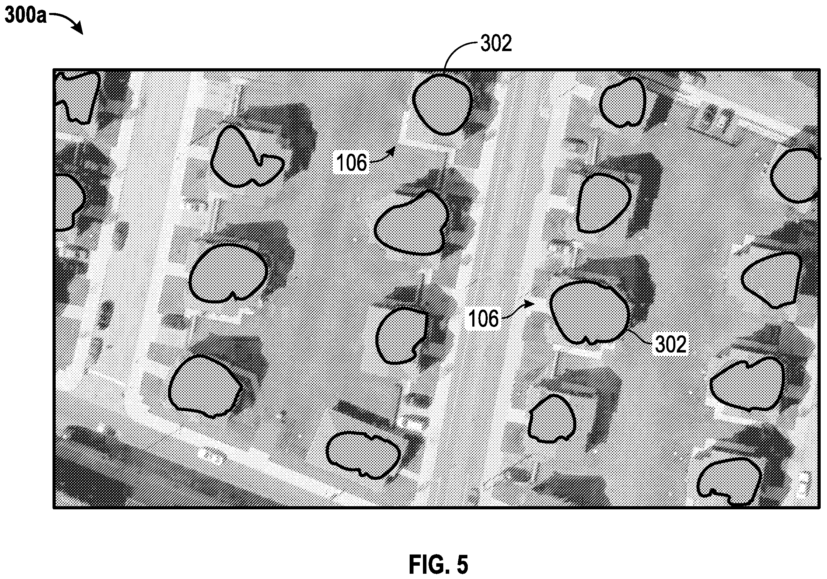

In some embodiments, system 10 may use an application (e.g., software application) to evaluate and select geo-referenced image 300 containing structure 106, as well as corresponding geo-referenced images from other cardinal directions for structure 106 as indicated by reference number 253 in FIG. 3B. For example, determination of best or suitable point of interest may be made using methods and systems as described in U.S. Patent Application Serial No. 12/221,571, published as US 2010/0034483. For example, FIG. 5 illustrates geo-referenced image 300a of structures 106 identified using a building detection algorithm indicated by building identifiers 302. User 32 may select structure 106 on geo-referenced image 300a as indicated by reference number 254 in FIG. 3B.

Once targeted location and structure 106 is selected, system 10 may select geo-referenced oblique images 300 to show all facets of structure 106 as indicated by reference number 257.

Referring to FIGS. 1, 3B, 6A and 6B, the system 10 may provide an edge detection algorithm to be executed providing definition of edges of structures 106 in the geo-referenced image(s) 300b as indicated by reference numbers 258-278 in FIG. 3B. System 10 may store each edge 108, 110 and/or 112 electronically in a non-transitory table with geo-referenced information, image information and confidence values as described herein. System 10 may also classify and store information regarding the edges 108, 110 and/or 112 electronically in a non-transitory file based on position and orientation within geo-referenced image 300. For example, system 10 may classify orientation of each edge as vertical edges 108, horizontal edges 110, and sloped edges 112 of structure 106 as indicated by reference numeral 262.

Any suitable edge detection algorithm capable of finding the edges 108, 110 and 112 of structure 106 may be used to locate edges within geo-referenced image 300b. For example, a LoG algorithm may be used to provide definition of edges 108, 110 and 112 of structure 106. System 10 stores each edge 108, 110 and 112 in a table in an electronic format with geo-referencing information, image information, and/or confidence value as indicated by a reference numeral 249 of Fig. 3B.

In some embodiments, a color clustering algorithm (e.g., YaW algorithm) may be used in addition to, or in lieu of, an edge detection algorithm. Color clustering algorithms may provide spectral content of each pixel in geo-referenced image 300b and grouping of adjacent pixels having similar spectral content. Further, by providing multiple algorithms, one or more algorithms may aid in eliminating misclassifications by another algorithm.

System 10 may assign a value indicative of a level of confidence an algorithm achieved when determining whether edges 108, 110 and 112 are present in geo-referenced image 300b as indicated by reference number 259 in FIG. 3B. For example, an algorithm may provide for what is considered a detected edge. A confidence value may be assigned for the detected edge.

Confidence values may provide for classification of detected edges as: (1) good edges, (2) likely edges, (3) unlikely edges, and/or (4) discarded edges as indicated by reference numeral 261 in Fig. 3B. For example, if a detected edge scores a high confidence value using a single algorithm, the detected edge may be considered a good edge. If a detected edge scores a low confidence value using a single algorithm, the detected edge may be considered a likely edge or unlikely edge depending on the value.

In using multiple algorithms, if a detected edge scores a high confidence value in one algorithm and a low confidence value in a separate algorithm, the detected edge may be considered a likely edge. If a detected edge scores a high confidence value in one algorithm but is non-existent in another algorithm, the detected edge may be considered an unlikely edge. If a detected edge scores a low confidence value in multiple algorithms, the detected edge may be considered an unlikely edge.

In downstream processing, generally, good edges may initially be used. If there is insufficient data to create footprint data using solely good edges, likely edges may be considered. If, after all good edges and likely edges are considered, there is still insufficient data to create footprint data, the process may indicate a failure. If the process indicates a failure, an operator may manually provide additional data regarding the edges 108, 110 and/or 112 of structure 106.

Referring to FIGS. 1, 3B, 6B and 7, an ortho-rectified image 302 may also be processed providing edge detection of a roof 132 of structure 106 as indicated by reference numbers 255 and 256 of FIG. 3B. For example, system 10 may selet a geo-referenced orthogonal image 302 displaying roof 132 of structures 106. System 10 may then estimate a boundary of structure using building roof detection.

Edge detection of roof 132 may provide a bound box area 134 to be applied to oblique geo-referenced images 300 and/or in validation of edges 108, 110 and 112 as indicated by reference numbers 263-264 of FIG. 3B. Validation of edges 108, 110 and 112 may occur as edges within boundary of roof 132 (i.e., inside bound box 134) may be considered good or likely edges and edges found beyond boundary of roof 132 (i.e., outside bound box 134) may be considered unlikely edges. Area of bound box 134 may optionally be expanded. For example, bound box area 134 may be expanded by 20% in one or more directions. Expansion of bound box 134 may also compensate for errors between different geo-referenced images (e.g., misalignment errors between geo-referenced images).

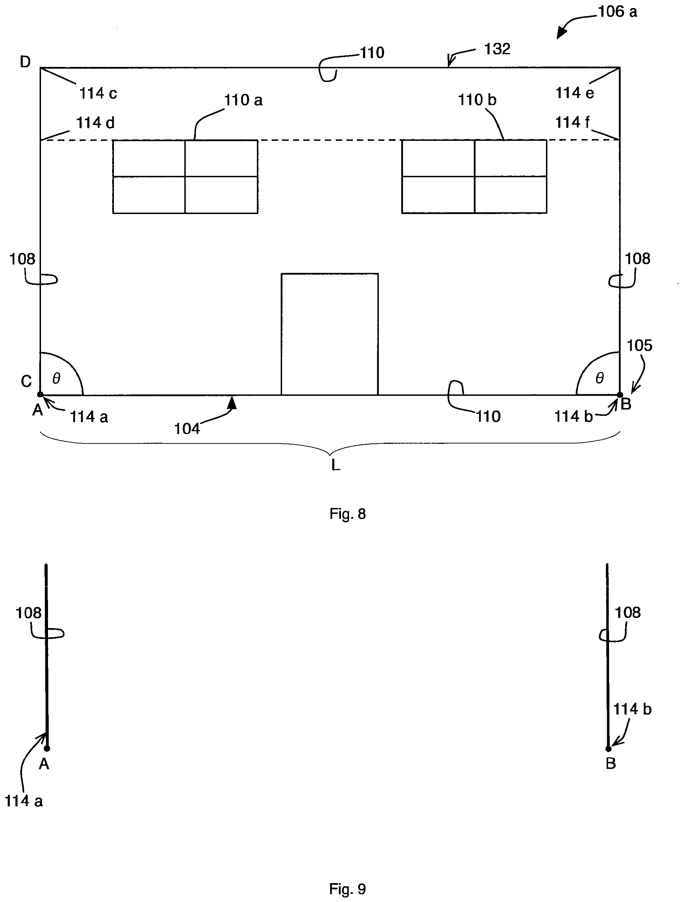

Referring to FIGS. 1, 3B and 8-11, system 10 may determine whether one or more horizontal edges 110 connect outermost vertical edges 108. FIGS. 8-11 illustrate a simplified facet of a structure 106a in a single cardinal direction for purposes of demonstration of the methods described herein. Generally, vertical edges 108 and horizontal edges 110 may be used to determined line segments 104. More specifically, system 10 may determine horizontal edges 110 that extend between vertical edges 108 as described in further detail herein. Generally, system 10 may extrapolate horizontal edges 110 and vertical edges 108 of each facet of structure 106. The system 10 preferably calculates the geographic location in Latitude/Longitude coordinates and orientation of the edges 108 and 110 utilizing any suitable coordinate system. The system 10 may utilize wire frame data of the structure 106 determined from one or more electronic file of the oblique image(s) 300 in determining one or more line segments 104.

Vertical edges 108 may be provided in a list and sorted by relative position from a first point to a second point along structure 106a. For example, vertical edges 108 may be sorted by relative position from left (point A) to right (point B) along structure 106a. Similarly, horizontal edges 110 may be provided in a list and sorted by relative position from a first point to a second point. For example, horizontal edges 110 may be sorted by relative position from bottom (point C) of structure to top (point D) of structure 106a. It should be noted that direction of sorting is arbitrary, fixed or combinations thereof. System 10 may group the vertical and/or horizontal edges 108, 110 by relative position. System 10 may receive user input to group the vertical and/or horizontal edges 108, 110 by relative position.

Referring to reference numbers 269-270 of FIG. 3B, system 10 may pair the vertical edges 108 to determine the number of facets of structure 106. If multiple facets exist, one or more line segments 104 for each facet may be determined.

Referring to FIGS. 3B, 8 and 9, system 10 may determine at least one horizontal edge 110 extending between vertical edges 108 as indicated by reference number 271. Point of intersection between horizontal edge 110 and vertical edges 108 provides vertices 114a-f. Generally, angle of intersection at vertices 114 may be approximately 90 degrees. FIG. 9 illustrates vertices 114a and 114b on the outermost vertical edges 108 of structure 106a in FIG. 8.

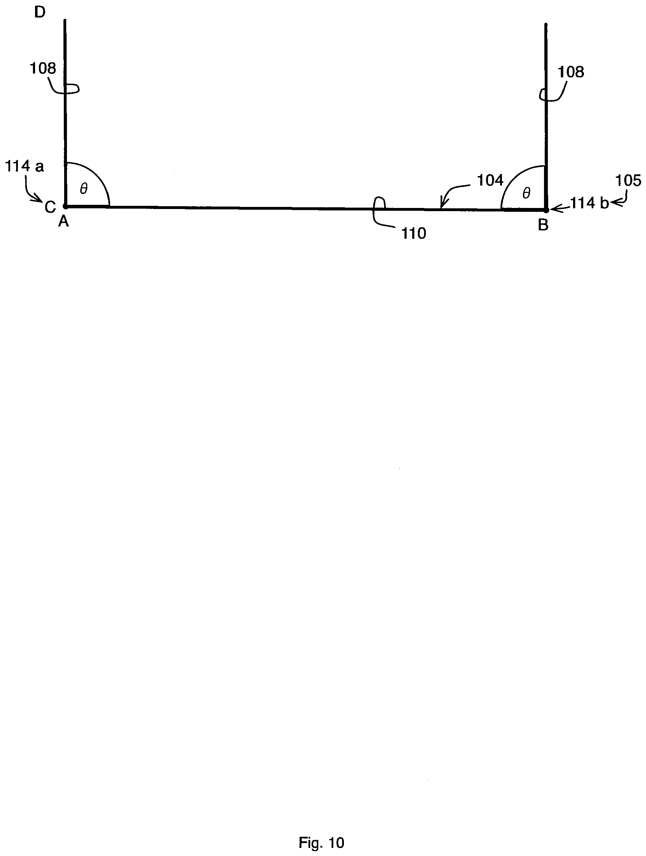

Referring to FIGS. 3B, 8 and 10, if multiple horizontal edges 110 extend from vertical edges 108, generally, system selects horizontal edges 110 connecting vertical edges 108 of facet of structure parallel to horizontal edge 110 of roof 132 at lowest point within bounding area as detailed by reference numbers 275-279 of FIG. 3B. For example, FIG. 10 illustrates use of horizontal edge 110 at base 105 of structure 106a. However, if the lowest horizontal edge 110 is not at base 105, system 10 may alternatively provide a horizontal line connecting vertical edges at a location parallel to horizontal edge 110 of roof 132.

An angle of intersection Θ may be determined between horizontal edge 110 and vertical edges 108 at vertices 114a and 114b. Angle of intersection Θ may be approximately a 90° angle or another angle. If angle of intersection Θ is not approximately a 90° angle, another horizontal edge 110 extending between vertices 114a and 114b may be located and/or used.

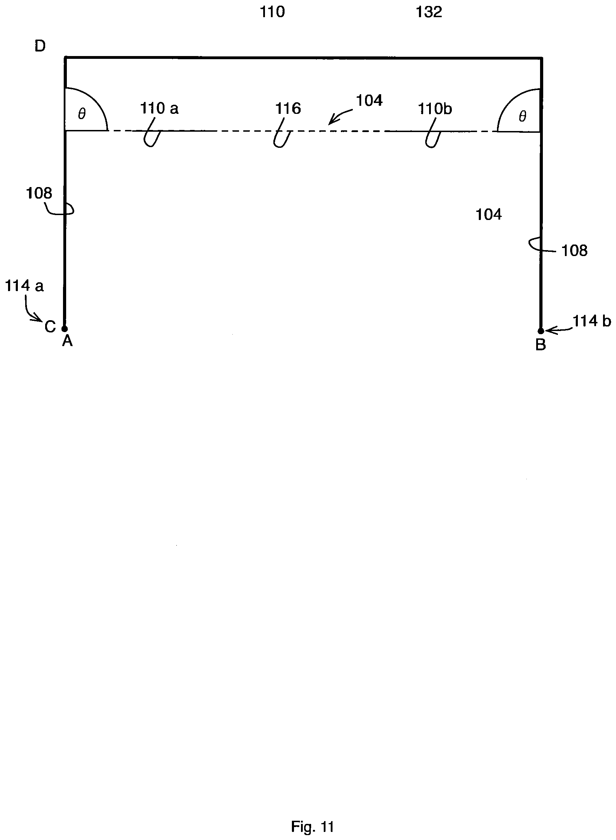

Referring to FIGS. 8 and 11, if horizontal edge 110 extending between vertices 114a and 114b cannot be determined (e.g., a horizontal edge does not exist that connects 114a and 114b), alternative horizontal edges may be extended. FIG. 11 illustrates the outermost vertical edges 108, edge 110 of roof, and horizontal edges 110a and 110b of structure 106a.

In providing for extended edges, edge 110 of roof 132 may first be determined. To provide edge 110 of roof 132, a listing of vertical edges 108 may be searched to determine the longest vertical edge. The longest vertical edge typically connects to horizontal edge 110 of roof 132.

With location and position of edge 110 of roof 132 determined, a listing of horizontal edges 110 may then be searched finding at least one collinear horizontal edge to edge 110 of roof 132 (e.g., horizontal edges 110a and 110b). An extension 116 may be made between one horizontal edge segment (e.g., horizontal edge 110a) to connect to another horizontal edge segment (e.g., horizontal edge 110b) and/or extend a horizontal edge segment to connect to vertical edges 108. This method assumes that collinear horizontal edges 110a and 110b are detected from horizontally extending objects located within the geo-referenced image(s) 300, such as one or more windows, doors, fascia, or similar structures. Collinear horizontal edges 110a and 110b may then be extended between vertical edges 108 to provide line segment 104 as indicated by the dashed lines in Fig. 8.

Additionally, angle of intersection Θ may also be identified on collinear horizontal edges 110a and/or 110b. If angle of intersection Θ is not approximately 90 degrees, another collinear horizontal edge 110 may be identified and used.

Once suitable horizontal edge 110 is determined to extend from first vertex 114a to second vertex 114b and/or include angle of intersection Θ of approximately 90 degrees, e.g., within + or - 5 degrees. A relative length L extending along horizontal edge 110 may be determined. Measurements may be made at base 105 of structure 106. In some embodiments, having measurements at base 105 of structure 106 may reduce error from miscalculations based on eaves/roof of structure 106, and/or the like.

To determine relative length L, vertical edges 108 may be traced downward the same number of pixels until whichever vertical edge 108 ends first. By adjusting vertical pixel location, at least two alterations may be made. First, a line connecting both vertices 114 may be substantially parallel to horizontal line 110 of roof 132. Second, location of position closest to base 105 of structure 106 may be determined.

Having vertices 114a and 114b at the substantially similar vertical pixel location, geo-referencing information associated with images and vertical pixel locations may be used to calculate a relative length L of line segment 104. In particular, the location of each vertice 114 can be determined using a single image with geo-referencing information and a tessellated ground plane as described in detail in U.S. Patent No. 7,424,133.

The geographical locations of the vertices 114a and 114b can also be determined using two geo-referenced images (preferably captured at different times and from different locations) with stereo photogrammetry techniques. Once the geographic locations of the vertices 114a and 114b have been determined, the relative length L can then be determined using a number of approaches including, but not limited to, the Gaussian formula for determining distance between two geographic locations that are shown in the same geo-referenced image or geo-referenced images. The term "relative length" as used herein refers to both of the vertices 114a and 114b being shown in the one or more geo-referenced images used to calculate the geographic locations of the vertices 114a and 114b.

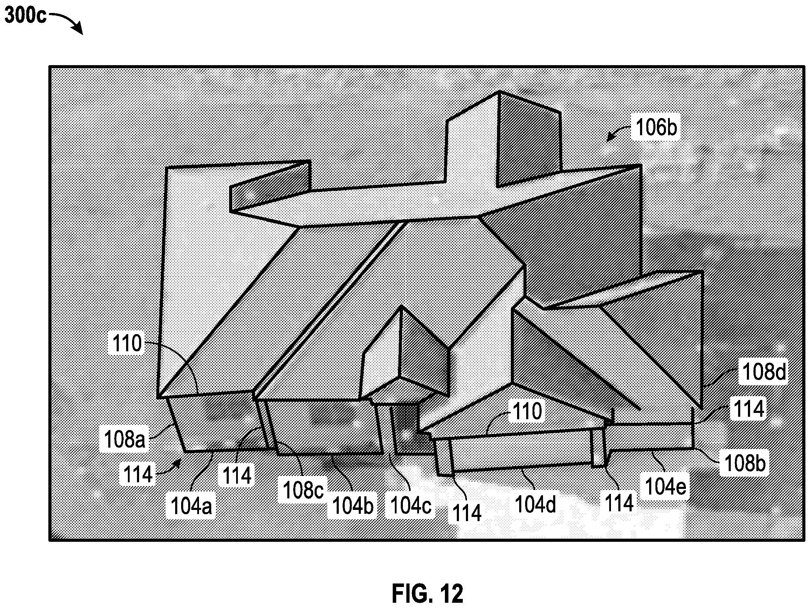

Referring to FIG. 12, multiple line segments 104 may be positioned at each compass direction. For example, multiple line segments 104a-104e may be positioned on a North side of structure 106b. To determine whether a single line segment 104 or multiple line segments are at a compass direction of structure, horizontal edges 110 may be reexamined to determine if horizontal edge 110 extends between vertices 114 at an adjusted vertical pixel location If yes, line segment 104 may be considered to be the only line segment at that compass direction (e.g., as in FIGS. 8-11). If there is not a single horizontal edge 110 connecting vertices 114, multiple line segments 104 may be located at that compass direction.

In structures 106 with multiple line segments 104, vertical edges 108 may be searched to determine if there are additional vertical edges 108 between the outermost vertical edges. If additional vertical edges 108 are present, two vertical edges 108 between the outermost vertical edges may be selected and the process repeated to provide for additional line segments 104. For example, FIG. 12 includes outermost vertical edges 108a and 108b. Vertical edges 108c and 108d positioned adjacent to vertical edges 108a and 108b respectively, may be selected and the process described in detail above may be repeated to provide for additional line segments 104. This may be repeated until all line segments 104 for the compass direction are determined (e.g., lines segments 104a-104e). Additionally, the process described in detail above may be repeated for each compass direction.

Each compass direction may include one set of line segments 104. For example, in FIG. 12, the compass direction viewed includes one set of line segments 104a-104e. Each geo-referenced image 300 provided may be processed yielding four sets of line segments 104 with one set of line segments for each compass direction. Each set of line segments 104 may include measurements and location. Line segments 104 may be matched with corresponding line segments 104 from each image. For example, vertices 114 may be aligned between geo-referenced images such that corresponding line segments 104 from each image align.

Referring to FIGS. 1, 3B and 13, line segments 104 may be used in forming footprint 102. As detailed by reference numbers 282-284 of FIG. 3B, system 10 may provide a composite of all facets of structure 106 from each selected geo-referenced image 300 to form footprint 102. System 10 may display footprint 102 of structure 106 on geo-referenced image 300. Further calculations (e.g., area, volume, and the like) may be made based on line segments 104 of footprint 102. Cumulative length of the line segments 104 of the footprint 102 of the structure 106 may be calculated.

A final geographic location may be assigned to footprint 102. In one embodiment, geography of footprint 102 may be determined by averaging location between similar vertices 114 in geo-referenced images. For example, a centroid of a single vertex (e.g., vertex 114a) may be calculated by finding an average of all locations of that vertex across all geo-referenced images. Opposing side dimensions may be averaged to determine proper dimensions (e.g., North side of structure 106 and South side of structure 106 may be averaged, and East side of structure 106 and West side of structure 106 may also be averaged). A single vertex 114 may be held at a constant and other vertices 114 may be adjusted accordingly. The centroid may be found by averaging the adjusted vertices 114. Distance and direction between two centroids may be calculated (e.g., Gaussian algorithm) such that all vertices 114 may be offset centering footprint 102 of structure 106.

For non-simple structures, each set of vertices 114 from each image may be assembled. If only vertices 114 from a single image are used, gaps between line segments 104 may exist. Such gaps may be filled in by identifying line segments 104 using other geo-referenced images (e.g., line segments 104 identified using an oblique image showing North side of a structure may be filled in using an oblique image showing South side of the structure).

Line segments 104 for an entire length of a non-rectangular structure may be averaged with its opposing wall (e.g., North/South, East/West). For example, if a composite wall averages out to be 100', but it is made of three line segments 104 of 42', 36' and 28' for a total of 106', each line segment 104 may be compressed by roughly 6%. This may yield segments of 39.6', 34', and 26.4' for a total length of 100'.

Referring to FIGS. 1 and 8-12, in addition to providing a means for a fully automated determination of footprint 102 of structure 106, methods described herein may provide assistance for manual generation of footprint 102 of structure 106. Once vertical edges 108 and horizontal edges 110 are determined (automatically or with user assistance) edges 108 and 110 may be used in tracing the footprint 102 of structure 106. For example, when user 32 selects a first corner of a structure 106 and moves a cursor or similar mechanism in a first direction (e.g., right), a line may extend parallel to a majority of horizontal edges 110 and extend to where the line intersects vertical edges 108 at substantially 90 degrees (e.g., using standard geometric intersection algorithms). As such, user 32 may outline footprint 102 of structure 106 for each side of structure 106 and combine each side using methods described herein.

In various aspects, the set of instructions discussed above can be distributed or used in a variety of manners. For example, one or more computer readable medium storing the set of instructions could be sold and/or distributed through retail locations as a set of one or more CD-ROMs or downloaded from a server. The term "sold" as used herein includes a sale where ownership is transferred, as well as an exchange of funds where a license or rights are granted but ownership has not changed. As another example, the set of instructions could be made available to the processor for execution in a variety of manners, such as by installing the set of instructions onto a local hard drive or memory, or by having the processor access a remote server or memory providing the set of instructions.

The set of instructions can be used in various manners to generate reports/information that can be used in a variety of industries, as set forth below. The information regarding the footprint 102 can be used to determine the size, area, layout, and/or shape of the footprint 102. Information about the footprint 102 can be assessed or compared with a separately created sketch of the footprint 102 to verify the accuracy of the separately created sketch, or vice-versa.

Information about the footprint 102 can also be used to determine encroachment/compliance of the structure 106 with various rules and regulations. For example, boundaries of the footprint 102 can be placed in a correct geographic location on a site plan or survey having one or easements, buildings/structures (such as electrical lines or gas pipes) and/or property boundaries to visually indicate any overlap.

The system 10 may allow interactive user calculations on the footprint 102.

Further, the footprint 102 can be used to calculate total living/usable area of the structure 106. In this regard, areas encompassed by the walls of the structure 106 can be automatically removed from the calculation. For example, if the structure 106 is a rectangle having outer dimensions of 45 feet x 75 feet, and the thickness of the walls is one foot, then the livable/usable area would be 43 feet x 73 feet = 3139 square feet. Logic can be provided for estimating the thickness of the walls based on various matters, such as type of construction, type of wall, type of building and the like. One or more default value(s) for the thickness of the walls may also be stored and used. The system 10 may also have logic for determining/receiving a number of floors to be used in the calculation of the livable/usable area. Information indicative of the size, shape, area, and/or livable/usable area can be incorporated into a report. For example, such information can be incorporated into an electronic display, an electronic report, a hard-copy of the report or the like. For example, such information can be incorporated into the report shown in Fig. 3 of the patent application titled "Computer System for Automatically Classifying Roof Elements", identified by U.S. Serial No. 12/909,692, and filed on October 21, 2010, and published as US 2012/0101783.

The livable/usable area can be provided to property assessors and used to determine tax assessments or the like. Information regarding the footprint 102 can also be used to generate an accurate three-dimensional model of the structure 106, including a three-dimensional model of a roof of the structure 106. The three-dimensional model of the roof of the structure 106 can be determined using any suitable technique, such as disclosed in U.S. Patent No. 7,509,241.

Information indicative of the footprint 102 can also be used to determine the size (including area) and shapes of one or more walls of the structure 106. This can be accomplished by calculating a height of the roof at one or more locations on the structure 106 and then projecting upward from the footprint 102 to the roof of the structure. The sizes and shapes of one or more walls can be used in reports for estimating materials for reconstruction, modification and/or maintenance of the structure 106. Furthermore, the system 10 may also be used to calculate the cumulative area of the walls of the structure 106. For example, the cumulative areas of the walls of the structure 106 can be used for estimating an amount of siding or paint needed for renovating/repairing the walls of the structure 106.

The volume of the structure 106 may also be estimated and included within a report. For example, the volume of the structure 106 can be used by a heating, ventilation, and air conditioning (HVAC) contractor to estimate the size of a suitable heating, ventilation, and air conditioning system for the structure 106.

The information indicative of the footprint 102 can be used for thermal ratings and/or material estimates in construction and/or reconstruction projects by architects, engineers and/or construction workers; building information modeling applications; sketch verification applications; high consequence area/encroachment compliance; total living area calculations/applications; finished siding reports and/or applications; paint estimate reports and/or applications; roof reports and/or applications; solar reports and applications (including a combination of building footprint and roof three-dimensional model); and accurate three-dimensional models of the structure for building information management applications.

Information indicative of footprint 102, area, and/or volume of the structure 106 can be used by disaster recovery agencies, such as the Federal Emergency Management Agency, or by insurance agencies to estimate the amount of debris created in a disaster and/or the cost of the disaster after one or more buildings has been moved, removed, distorted, or completely disappeared from the building's land parcel. Further, the information can be used to determine what the building footprint should be of a building that may be obscured by debris from an accident or disaster.

Although the foregoing has been described in some detail by way of illustration and example for purposes of clarity of understanding, it will be obvious to those skilled in the art that certain changes and modifications may be practiced.

The foregoing description provides illustration and description, but is not intended to be exhaustive or to limit the inventive concepts to the precise form disclosed. Modifications and variations are possible in light of the above teachings or may be acquired from practice of the methodologies set forth in the present disclosure.

Even though particular combinations of features are recited in the claims and/or disclosed in the specification, these combinations are not intended to limit the disclosure. In fact, many of these features may be combined in ways not specifically recited in the claims and/or disclosed in the specification. Although each dependent claim listed below may directly depend on only one other claim, the disclosure includes each dependent claim in combination with every other claim in the claim set.

No element, act, or instruction used in the present application should be construed as critical or essential to the invention unless explicitly described as such outside of the preferred embodiment. Further, the phrase "based on" is intended to mean "based, at least in part, on" unless explicitly stated otherwise.

## Claims

1. A computer implemented method (200, 204) for determining a footprint (102) of a structure (106), comprising the steps of:
identifying (208, 258) edges (108, 110) of facets of a structure by analyzing one or more electronic files stored in one or more non-transitory memories, the one or more electronic files being indicative of multiple geo-referenced oblique images (300), wherein said multiple geo-referenced oblique images have been obtained using oblique aerial imagery or oblique terrestrial imagery;
determining (259) three-dimensional information of the edges including position, orientation and relative lengths of the edges using the multiple geo-referenced oblique images, wherein the multiple geo-referenced oblique images include geo-referenced images from each cardinal direction and show all the facets of the structure;
determining (272) a ground location of each facet of the structure;
determining (273, 274, 275, 276, 277), automatically, at least one line segment of a portion of a footprint of the structure at a base (105) of the structure (106) utilizing at least one of the relative position and orientation of the edges, by determining a horizontal line extending the entire length between two vertical edges of a facet at the base of the structure or extending the entire length between two vertical edges of a facet and parallel to a horizontal edge (110) of a roof (132) of the structure, if a lowest horizontal line is not at the base of the structure; and
forming (282) a footprint of the structure using the at least one line segment.

2. The method of claim 1, wherein the method is adapted to be executed without manual intervention.

3. The method of claim 1, further including receiving user input for determining locations and orientations of the edges.

4. The method of claim 1, wherein the method generates a three-dimensional model of the structure utilizing the line segments.

5. The method of claim 1, further including storing (259) information indicative of the edges as line segments.

6. The method of claim 1 or 5, wherein the line segments have lengths, and further including providing a cumulative length of the line segments for the footprint of the structure.

7. The method of claim 1 or 5, wherein the line segments have lengths, and further including determining an area of the footprint of the structure.

8. The method of claim 1, further including grouping the edges by relative position.

9. The method of claim 8, wherein grouping the edges by relative position includes receiving user input to group edges by relative position.

10. The method of claim 1, wherein the edges include vertical edges and at least one horizontal edge and further including determining vertices of the footprint, wherein the vertices are respective points of intersection between the horizontal edge and the vertical edges.

11. The method of claim 10, wherein the vertical edges have a top and a bottom, and the at least one horizontal edge is above the bottoms of the vertical edges.

12. The method of any one of claims 1, 10, or 11, wherein determining the horizontal line (111) comprises determining a horizontal edge (110a) that extends only a portion of the length between the two vertical edges and extending the horizontal edge to connect the vertical edges (108).

13. The method of claim 1 or 10, further including determining (271) an angle between at least one vertical edge and at least one horizontal edge for determining at least one line segment of the footprint.

14. The method of claim 1, wherein determining, automatically, at least one line segment of a portion of a footprint utilizes wire frame data of the structure determined from the one or more electronic files of the geo-referenced oblique images.

15. The method of claim 1, further comprising:
generating a report.

16. The method of claim 1, further comprising:
using the footprint of the structure for a roof report.

17. A non-transitory computer readable medium storing a set of instructions for running on a computer system to carry out the method of any of claims 1 to 14.

18. A computer system (10) for determining a footprint of a structure, comprising:
at least one processor; and
the non-transitory computer readable medium of claim 17.

## Patentansprüche

1. Computerimplementiertes Verfahren (200, 204) zum Bestimmen eines Grundrisses (102) einer Struktur (106), umfassend die Schritte:
Identifizieren (208, 258) von Kanten (108, 110) von Facetten einer Struktur durch Analysieren einer oder mehrerer elektronischer Dateien, die in einem oder mehreren nicht-flüchtigen Speichern gespeichert sind, wobei die eine oder mehreren elektronischen Dateien bezeichnend für mehrere georeferenzierte schräge Bilder 300 sind, wobei die mehreren georeferenzierten schrägen Bilder mittels schräger Luftbildaufnahme oder schräger terrestrischer Bildaufnahme erhalten wurden; Bestimmen (259) dreidimensionaler Information von den Kanten, beinhaltend Position, Orientierung und relative Längen von den Kanten mittels der mehreren georeferenzierte schrägen Bilder, wobei die mehreren georeferenzierten schrägen Bilder georeferenzierte Bilder von jeder Himmelsrichtung beinhalten und alle Facetten der Struktur zeigen;
Bestimmen (272) einer Bodenposition von jeder Facette der Struktur;
Bestimmen (273, 274, 275, 276, 277), automatisiert, zumindest eines Linienabschnittes eines Teils eines Grundrisses der Struktur an einer Basis (105) der Struktur (106), unter Verwendung von zumindest einem von der relativen Position und Orientierung von den Kanten, mittels Bestimmen einer horizontalen Linie, welche sich die gesamte Länge zwischen den zwei vertikalen Kanten von einer Facette an der Basis der Struktur erstreckt oder welche sich die gesamte Länge zwischen zwei vertikalen Kanten von einer Facette und parallel zu einer horizontalen Kante (110) von einem Dach (132) der Struktur erstreckt, falls eine niedrigste horizontale Linie sich nicht an der Basis der Struktur befindet; und
Bilden (282) eines Grundrisses der Struktur mittels dem mindestens einen Linienabschnittes.

2. Verfahren nach Anspruch 1, wobei das Verfahren angepasst ist um ohne manuelle Intervention ausgeführt zu werden.

3. Verfahren nach Anspruch 1, zusätzlich beinhaltend Empfangen von Benutzereingaben zum Bestimmen von Positionen und Orientierungen der Kanten.

4. Verfahren nach Anspruch 1, wobei das Verfahren unter Verwendung der Linienabschnitte ein dreidimensionales Modell der Struktur erzeugt.

5. Verfahren nach Anspruch 1, zusätzlich beinhaltend Speichern (259) von Informationen als Linienabschnitte, welche bezeichnend für die Kanten sind.

6. Verfahren nach Anspruch 1 oder 5, wobei die Linienabschnitte Längen aufweisen, und zusätzlich beinhaltend Bereitstellen von einer kumulativen Länge der Linienabschnitte für den Grundriss der Struktur.

7. Verfahren nach Anspruch 1 oder 5, wobei die Linienabschnitte Längen aufweisen, zusätzlich beinhaltend Bestimmen einer Fläche desGrundrisses der Struktur.

8. Verfahren nach Anspruch 1, zusätzlich beinhaltend Gruppieren der Kanten aufgrund von relativer Position.

9. Verfahren nach Anspruch 8, wobei das Gruppieren der Kanten aufgrund von relativer Position ein Empfangen von Benutzereingaben zum Gruppieren der Kanten aufgrund von relativer Position beinhaltet.

10. Verfahren nach Anspruch 1, wobei die Kanten vertikalen Kanten und zumindest eine horizontale Kante beinhalten und zusätzlich beinhaltet: Bestimmen von Schnittpunkten des Grundrisses, wobei die Schnittpunkte jeweilige Punkte, an denen sich die horizontale Kante und die vertikale Kante schneiden, sind.

11. Verfahren nach Anspruch 10, wobei die vertikalen Kanten ein oberes Ende und ein unteres Ende aufweisen, und wobei die zumindest eine horizontale Kante oberhalb der unteren Enden der vertikalen Kanten ist.

12. Verfahren nach einem der Ansprüche 1, 10, oder 11, wobei das Bestimmen der horizontalen Linie (111) das Bestimmen einer horizontalen Kante (110a), die sich nur ein Teil von der Länge zwischen den zwei vertikalen Kanten erstreckt und die horizontale Kante verlängert, um die vertikalen Kanten (108) zu verbinden, umfasst.

13. Verfahren nach Anspruch 1 oder 10, zusätzlich beinhaltend Bestimmen (271) eines Winkels zwischen zumindest einer vertikalen Kante und zumindest einer horizontalen Kante zum Bestimmen zumindest eines Linienabschnitts des Grundrisses.

14. Verfahren nach Anspruch 1, wobei das Bestimmen, automatisiert, zumindest eines Linienabschnitts von einem Teil eines Grundrisses Drahtgitterdaten der Struktur, welche von der einen oder mehreren elektronischen Dateien von den georeferenzierten schrägen Bildern bestimmt wurden, verwendet.

15. Verfahren nach Anspruch 1, zusätzlich umfassend:
Erzeugen eines Berichts.

16. Verfahren nach Anspruch 1, zusätzlich umfassend:
Verwenden des Grundrisses der Struktur für einen Dach-Bericht.

17. Nicht-flüchtiges computerlesbares Medium, welches ein Satz von Instruktionen, um das Verfahren nach einem der Ansprüche 1-14 auszuführen, zum Ablaufen auf einem Computersystem speichert.

18. Computersystem (10) zum Bestimmen eines Grundrisses einer Struktur, umfassend:
zumindest einen Prozessor; und
das nicht-flüchtige computerlesbare Medium nach Anspruch 17.

## Revendications

1. Procédé (200, 204) implémenté par ordinateur pour déterminer une empreinte au sol (102) d'une structure (106), comprenant les étapes consistant :
à identifier (208, 258) des bords (108, 110) de facettes d'une structure en analysant un ou plusieurs fichier(s) électronique(s) stocké(s) dans une ou plusieurs mémoire(s) non transitoire(s), le ou les plusieurs fichier(s) électronique(s) indique/indiquent de multiple images obliques géoréférencées (300), où lesdites multiple images obliques géoréférencées ont été obtenues en utilisant une imagerie aérienne oblique ou une imagerie terrestre oblique ;
à déterminer (259) des informations tridimensionnelles des bords comportant une position, une orientation et des longueurs relatives des bords en utilisant les multiple images obliques géoréférencées, où les multiple images obliques géoréférencées comportent des images géoréférencées à partir de chaque direction cardinale et montrent toutes les facettes de la structure ;
à déterminer (272) un emplacement au sol de chaque facette de la structure ;
à déterminer (273, 274, 275, 276, 277), automatiquement, au moins un segment de droite d'une partie d'une empreinte au sol de la structure au niveau d'une base (105) de la structure (106) en utilisant au moins l'une de l'orientation et de la position relative des bords, en déterminant une ligne horizontale s'étendant sur toute la longueur entre deux bords verticaux d'une facette au niveau de la base de la structure ou s'étendant sur toute la longueur entre deux bords verticaux d'une facette et parallèlement à un bord horizontal (110) d'un toit (132) de la structure, si la ligne horizontale la plus basse ne se trouve pas au niveau de la base de la structure ; et
à former (282) une empreinte au sol de la structure en utilisant l'au moins un segment de droite.

2. Procédé de la revendication 1, dans lequel le procédé est adapté pour être exécuté sans intervention manuelle.

3. Procédé de la revendication 1, comportant en outre le fait de recevoir une entrée d'utilisateur pour déterminer des emplacements et des orientations des bords.

4. Procédé de la revendication 1, dans lequel le procédé génère un modèle tridimensionnel de la structure en utilisant les segments de droite.

5. Procédé de la revendication 1, comportant en outre le fait de stocker (259) des informations indiquant les bords en tant que segments de droite.

6. Procédé de la revendication 1 ou 5, dans lequel les segments de droite ont des longueurs, et comportant en outre le fait de fournir une longueur cumulée des segments de droite pour l'empreinte au sol de la structure.

7. Procédé de la revendication 1 ou 5, dans lequel les segments de droite ont des longueurs, et comportant en outre le fait de déterminer une superficie de l'empreinte au sol de la structure.

8. Procédé de la revendication 1, comportant en outre le fait de grouper les bords par une position relative.

9. Procédé de la revendication 8, dans lequel le groupement des bords par une position relative comporte le fait de recevoir une entrée d'utilisateur pour grouper des bords par une position relative.

10. Procédé de la revendication 1, dans lequel les bords comportent des bords verticaux et au moins un bord horizontal et comportant en outre le fait de déterminer des sommets de l'empreinte au sol, où les sommets sont des points d'intersection respectifs entre le bord horizontal et les bords verticaux.

11. Procédé de la revendication 10, dans lequel les bords verticaux ont une partie supérieure et une partie inférieure, et l'au moins un bord horizontal est au-dessus des parties inférieures des bords verticaux.

12. Procédé de l'une quelconque des revendications 1, 10 ou 11, dans lequel la détermination de la ligne horizontale (111) comprend le fait de déterminer un bord horizontal (110a) qui s'étend seulement sur une partie de la longueur entre les deux bords verticaux et d'étendre le bord horizontal pour relier les bords verticaux (108).

13. Procédé de la revendication 1 ou 10, comportant en outre la détermination (271) d'un angle entre au moins un bord vertical et au moins un bord horizontal pour déterminer au moins un segment de droite de l'empreinte au sol.

14. Procédé de la revendication 1, dans lequel le fait de déterminer, automatiquement, au moins un segment de droite d'une partie d'une empreinte au sol utilise des données filaires de la structure déterminées à partir du ou des plusieurs fichier(s) électronique(s) des images obliques géoréférencées.

15. Procédé de la revendication 1, comprenant en outre : le fait de générer un rapport.

16. Procédé de la revendication 1, comprenant en outre :
le fait d'utiliser l'empreinte au sol de la structure pour un rapport de toit.

17. Support lisible par ordinateur non transitoire stockant un ensemble d'instructions pour être exécutées sur un système informatique pour mettre en oeuvre le procédé de l'une des revendications 1 à 14.

18. Système informatique (10) pour déterminer une empreinte au sol d'une structure, comprenant :
au moins un processeur ; et
le support lisible par ordinateur non transitoire de la revendication 17.
